# EUROPÄISCHE PATENTANMELDUNG

(11) **EP 4 559 308 A1**
(43) Veröffentlichungstag der Anmeldung: **28.05.2025**
(21) Anmeldenummer: 24214520.9
(22) Anmeldetag: 21.11.2024
(51) Int. Cl.: A01G 9/02

(54) **PFLANZTOPF MIT STAPELRAND**

(30) Priorität: 27.11.2023 DE 202023106987 U
(71) Anmelder: Pöppelmann Holding GmbH & Co. KG, 49393 Lohne (DE)
(72) Erfinder: Wilke, Jörg, 49393 Lohne (DE); Fangmann, Johann, 49393 Lohne (DE); Landwehr, Thorsten, 49401 Damme (DE); Timphus, André, 49393 Lohne (DE); Voggenreiter, Werner, 94496 Ortenburg (DE)

(57) **Zusammenfassung**

Ein Pflanztopf (1) aus dünnwandigem Kunststoff ist mit einer generell konischen Topfwand (3) versehen und einem zur Versteifung und Entwässerung profilierten und Löcher aufweisenden Aufstellboden (2), mit einem oberen flanschförmigen Rand (5), mit einem unterhalb des Randes (5) in die Topfwand eingeformten, im Wesentlichen gegenkonischen Stapelrand (6), zur Ausbildung einer Stapelkante (7), wobei ein Stapelabstand (d) zwischen dem Rand (5) und der Stapelkante (7) definiert ist. Um stabilere, höhere Stapel bilden zu können, die sich zudem leichter insbesondere maschinell entstapeln lassen, ist vorgesehen, dass unterhalb des Stapelrands (6) ein zylindrischer Abschnitt (8) in die Topfwand eingeformt ist, dessen Höhe (h) kleiner oder gleich dem Stapelabstand (d) ist.

## Beschreibung

Die vorliegende Erfindung betrifft einen Pflanztopf mit Stapelrand nach dem Oberbegriff des Anspruchs 1.

Ein gattungsgemäßer Pflanztopf ist in der EP 1422993 B1 dargestellt und beschrieben. Der aus einer dünnen Kunststofffolie im Thermoformverfahren tiefgezogene Pflanztopf hat einen steifen oberen flanschförmigen Rand mit der größten Wandstärke des Pflanztopfes. In seiner generell konischen Topfwand ist am Rand angrenzend ein im Wesentlichen konterkonischer Stapelrand eingeformt, wobei ein unterer Sims als Stapelkante ausgebildet ist, der durch einen zwischenliegenden Stützbereich mit dem flanschförmigen Rand als oberen Sims und als Auflager für einen einzustapelnden zweiten Pflanztopf verbunden ist. Der Stapelabstand ist durch die zwei Simse festgelegt. Für das ineinander geschachtelte Stapeln sind die Pflanztöpfe im Bereich der Simse mit einem geringen Ringspiel ausgelegt, damit die Pflanztöpfe im Stapel gegenseitig zentriert und koaxial ausgerichtet sind. Für eine gute Entformbarkeit einerseits und einer guten Stapelbarkeit andererseits ist der Stützbereich zumindest einenends im Anschluss an einen der beiden Simse wellenförmig gestaltet.

DE 29812475 U1 zeigt einen thermogeformten Pflanztopf mit einem Aufstellfuß aus einem am Rand doppellagig nach unten ragenden Randabschnitt. Der Pflanztopf wird über den Aufstellfuß gestapelt, indem dieser auf einer umlaufend tiefliegenden Fläche des profilierten Topfbodens eines zweiten untergestapelten Pflanztopfes aufsteht. Der Stapelabstand ist durch die Höhe des Aufstellfußes festgelegt. Der Topfrand ist ein bogenförmig nach unten rückgeformter Hohlrand mit einem konterkonischen ersten Wandabschnitt, an dem sich mehrere abgestufte stumpfkegelige Abschnitte der Topfwand anschließen.

US 5954223 A zeigt einen blasgeformten Pflanztopf mit einer stumpfkonischen Topfwand, die über eine Schulter in einen komplex profilierten Topfrand mit zwei radial abstehenden Lippen übergeht. Um die Festigkeit des Topfrands zu erhöhen, sind in einem unteren zylindrischen Abschnitt des Topfrands halbzylindrische Rippen eingeformt. Der Pflanztopf kann ineinander geschachtelt gestapelt werden, wobei die Schulter eines eingestapelten Pflanztopfes auf der Oberseite des Topfrands eines untergestapelten zweiten Pflanztopfes aufliegt. Der Stapelabstand ist durch den Abstand der Schulter von der Oberseite des Topfrands festgelegt.

US 3896587 A zeigt einen Pflanztopf mit einer bis zum oberen Rand durchgängig konischen Topfwand. Durch eine Stufe ist ein oberer konischer Wandabschnitt abgesetzt, der außen eine Vielzahl von in Umfangsrichtung beabstandeten vertikalen Rippen aufweist. Der Pflanztopf weist keine Stapelkanten für einen definierten Stapelabstand auf. Ein geschachtelt eingestapelter Pflanztopf stützt sich mit seinen Rippen an der glatten Innenseite des betreffenden Wandabschnitts eines untergestapelten Pflanztopfes ab. Die Lufträume zwischen den Rippen sollen ein einfacheres Trennen der gestapelten Pflanztöpfe ermöglichen. Zum Trennen und Herausziehen des jeweils oberen Pflanztopfes kann dessen radial auskragender und mit einer Schürze versehener Rand untergriffen werden, der in einer Stapelanordnung zum Rand des untergestapelten Pflanztopfes beabstandet ist.

Aufgabe der Erfindung ist es, einen gattungsgemäßen Pflanztopf dergestalt weiterzubilden, dass stabilere, höhere Stapel gebildet werden können, die sich zudem leichter insbesondere maschinell entstapeln lassen.

Die Aufgabe wird von einem Pflanztopf nach dem Anspruch 1 gelöst. Vorteilhafte Ausgestaltungen der Erfindung sind den auf diesem Anspruch rückbezogenen Unteransprüchen sowie der nachfolgenden Vorteils- und Figurenbeschreibung zu entnehmen.

Erfindungsgemäß ist vorgesehen, dass unterhalb des Stapelrands ein zylindrischer Abschnitt in die Topfwand eingeformt ist, dessen Höhe kleiner oder gleich dem Stapelabstand ist. Durch den zylindrischen Abschnitt konstanten Querschnitts wird der Pflanztopf beim Einstapeln bereits vom untergestapelten Pflanztopf geführt, bevor er seine endgültige Position im Stapel erreicht hat, wobei die Führungslänge ungefähr dem Stapelabstand entspricht. Der zylindrische Abschnitt bildet an seiner unteren Schulter eine zusätzliche Stützkante aus, die sich auf der Innenseite der Stapelkante des untergestapelten Pflanztopfes abstützen kann. Die Pflanztöpfe, die so doppelt oder zumindest redundant im Stapel auf den jeweils untergestapelten Pflanztöpfen aufliegen, bilden einen viel stabileren Pflanztopfstapel, der nicht nur besser alleine steht, sondern auch beim Transport in Kartonagen höher gestapelt werden kann. Die Stapelstauchfestigkeit ist wesentlich höher und der Kippwinkel ist verringert.

Unterhalb des zylindrischen Abschnitts kann eine radial breite Topfschulter ausgeformt werden, die in einem Topfmagazin von einer unteren Haltebacke zum einwandfreien Entstapeln genutzt werden kann. Vorteil der breiteren und in einem größeren Abstand als die Stapelkante zum Topfrand liegenden Topfschulter ist, dass das Topfmagazin schneller und insbesondere störungsfreier eingestellt werden kann. Durch den zylindrischen Abschnitt kann der Pflanztopf bei gleichem Durchmesser der im Rand liegenden Topföffnung ein größeres Topfvolumen ausweisen. Durch die gegenüber bisherigen Pflanztöpfen weiter oben angeordnete Topfschulter wird ein in Topflängsrichtung höherer Topfwandabschnitt zum Bedrucken und/oder Etikettieren dargeboten.

Der zylindrische Abschnitt kann im Rahmen üblicher Toleranzen eine leicht konische Wandung von +/- 1 ° aufweisen, die sich aber deutlich von der Konizität der sich unterhalb anschließenden Topfwand unterscheidet, die mit einem Winkel von mindestens 4° ausgeführt ist.

In dem unten beschriebenen Ausführungsbeispiel beträgt der Stapelabstand ca. 5,4 mm, während der zylindrische Abschnitt 5,35 mm hoch ist, also nur 0,05 mm niedriger. Der Pflanztopf kann im Querschnitt rund, quadratisch, rechteckig oder allgemein vieleckig sein, oder auch einen vom Boden zum Rand von rund auf mehreckig oder umgekehrt sich stetig ändernden Querschnittsverlauf aufweisen. Der Pflanztopf ist aus Kunststoff in allgemein dünner Wandstärke im Spritzguss oder vorzugsweise im Thermoformverfahren hergestellt. Ein thermogeformter Pflanztopf weist herstellungsbedingt im oberen Topfrand eine gegenüber den Wänden des Pflanztopfes höhere, größte Wandstärke auf.

In bevorzugter Weiterausgestaltung ist vorgesehen, dass der zylindrische Abschnitt eine spielarme Zentrierung und/oder Führung zu einem untergestapelten Pflanztopf ausbildet. Eine gute Zentrierung und/oder Führung wird dadurch erreicht, dass in Kombination mit der oben dargelegten Führungslänge die Weite des im Wesentlichen zylindrischen Abschnitts minimal kleiner ist als die Öffnungsweite im Topfrand. Eine spielarme Führung kann durch lokale Ausbuchtungen im zylindrischen Abschnitt erzielt werden.

In bevorzugter Weiterausgestaltung ist vorgesehen, dass in dem zylindrischen Abschnitt mehrere über den Umfang verteilte und radial nach außen vorstehende Rippen ausgeformt sind. Die vorzugsweise achsparallel und vorzugsweise über die Höhe des zylindrischen Abschnitts verlaufenden Rippen ermöglichen eine spielfreie Zentrierung und/oder Führung, ohne dass der Pflanztopf im untergestapelten Pflanztopf klemmt. Die Weite der Rippen ist gegenüber der Innenseite des Topfrandes zumindest so ausgeführt, dass nur ein minimales Untermaß vorliegt. Die Rippen können derart bemessen sein, dass zumindest ein Teil der Rippen die Innenseite des Topfrands, vorzugsweise im leichten Übermaß kontaktieren. Die radiale Flexibilität des zylindrischen Abschnitts, die insbesondere durch dessen geringe Wandstärke gegeben ist, sorgt dafür, dass die Rippen nahezu kraftfrei am Topfrand anliegen und so reibungsarm und vor allem klemmfrei führen. Gleichzeitig wird der zylindrische Abschnitt durch die Rippen axial ausgesteift, sodass sich eine stabiler ausgeformte Schulter ausbildet. Durch die Rippen wird die von der Schulter gebildete Stützkante stellenweise radial vergrößert. Die Rippen sind vorzugsweise in einem gleichen gegenseitigen Abstand angeordnet.

Vorzugsweise weisen die Rippen einen gegenseitigen Abstand in Umfangsrichtung von kleiner gleich 25 mm, bevorzugt kleiner gleich 12 mm, weiter bevorzugt zwischen 1,5 und 6 mm auf. Die große Anzahl von Rippen, die in einem vergleichsweise engen Abstand zueinander angeordnet sind, ermöglicht eine gute gegenseitige Zentrierung und/oder Führung von ineinander geschachtelten Pflanztöpfen. Die Pflanztöpfe lassen sich noch leicht zueinander verdrehen, was bei der Handhabung der Pflanztöpfe von Vorteil ist, besonders beim Entstapeln. Der gegenseitige Abstand der Rippen liegt im Ausführungsbeispiel bei ca. 2,6 mm. An dem einen Durchmesser von 84 mm aufweisenden zylindrischen Abschnitt sind somit 100 Rippen über den Umfang verteilt angeordnet.

Vorzugsweise weisen die Rippen eine Tiefe zwischen 0,1 und 2,5 mm, bevorzugt zwischen 0,1 und 1,0 mm auf. Als Tiefe wird hier die sich in radialer Richtung erstreckende Höhe der Rippen verstanden. Die vergleichsweise niedrigen Rippen schränken die radialelastischen Eigenschaften des zylindrischen Abschnitts nicht ein. Die geringe Tiefe reicht jedoch aus, um die Wandbereiche zwischen den Rippen von der Innenkante des Topfrands zu beabstanden, sodass Luft beim Stapeln und Entstapeln entweichen kann. Im Ausführungsbeispiel haben die Rippen eine Tiefe von ca. 0,2 mm und eine in Umfangsrichtung des Pflanztopfes gesehene Breite von ca. 1,2 mm.

Vorzugsweise ist die Weite von gegenüberliegenden Rippen ungefähr gleich oder leicht größer als die Öffnungsweite des flanschförmigen Rands. Ein vorzugsweise leichtes Übermaß von weniger als 0,5 mm kann durch die radiale Elastizität des zylindrischen Abschnitts ausgeglichen werden, sodass die Pflanztöpfe jedenfalls spielfrei zueinander geführt sind.

In bevorzugter Weiterausgestaltung ist vorgesehen, dass der Pflanztopf eine generell kegelstumpfe, runde Form aufweist. Vorzugsweise ist der Pflanztopf im Thermoformverfahren aus einer dünnen Kunststofffolie hergestellt.

In bevorzugter Weiterausgestaltung ist vorgesehen, dass die Wandstärke des zylindrischen Abschnitts das 0,2- bis 0,8-fache von der Wandstärke des flanschförmigen Rands ist. Im Ausführungsbeispiel beträgt die Wandstärke des zylindrischen Abschnitts wie im Stapelrand ca. 0,3 mm. Die Wandstärke des oberen flanschförmigen Rands beträgt 0,7 mm. Das Verhältnis ist 0,3 mm / 0,7 mm = 0,43.

Weitere Vorteile und Einzelheiten der Erfindung sind der nachfolgenden Figurenbeschreibung zu entnehmen. Einzelne technische Merkmale des nachfolgend beschriebenen Ausführungsbeispiels können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktionell gleichwirkende Elemente mit identischen Bezugsziffern versehen. Es zeigen
- Fig. 1: einen erfindungsgemäßen Pflanztopf in perspektivischer Ansicht;
- Fig. 2: einen Seitenansicht eines Stapels ineinander geschachtelter Pflanztöpfe;
- Fig. 3: einen Ausschnitt von einem Schnitt durch den Stapel;
- Fig. 4: eine Detailansicht von dem Randbereich des Pflanztopfes.

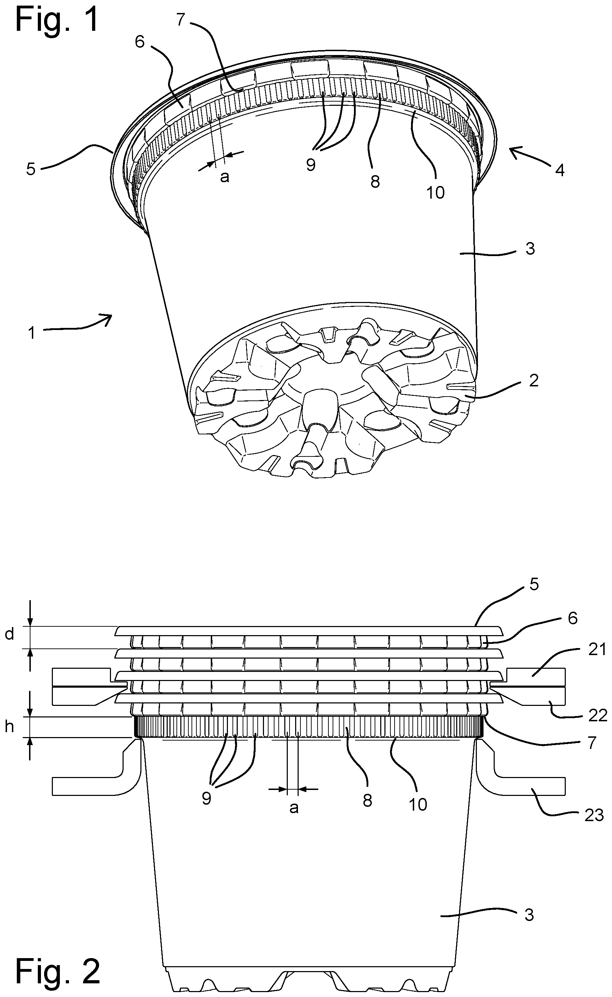

Der in Fig. 1 gezeigte runde Pflanztopf 1 ist aus einer dünnen Kunststofffolie thermogeformt und gestanzt. Aufgrund des Herstellungsverfahrens hat er die Gestalt eines Bechers mit einer einfachen, durchgängigen, unverzweigten Topfwand 3 in generell stumpfkonischer Form und einem Aufstellboden 2 mit Profilierung und Löchern zur Versteifung, Be- und Entwässerung sowie Belüftung. Die sich nach unten verjüngende Form ermöglicht es, gleiche Pflanztöpfe ineinander zu schachteln und somit raumsparend zu stapeln, wie in Fig. 2 gezeigt. Ein geringes Spiel zwischen den Topfwänden 3 der Pflanztöpfe ist für ein einwandfreies Entstapeln förderlich, vor allem wenn es maschinell erfolgt.

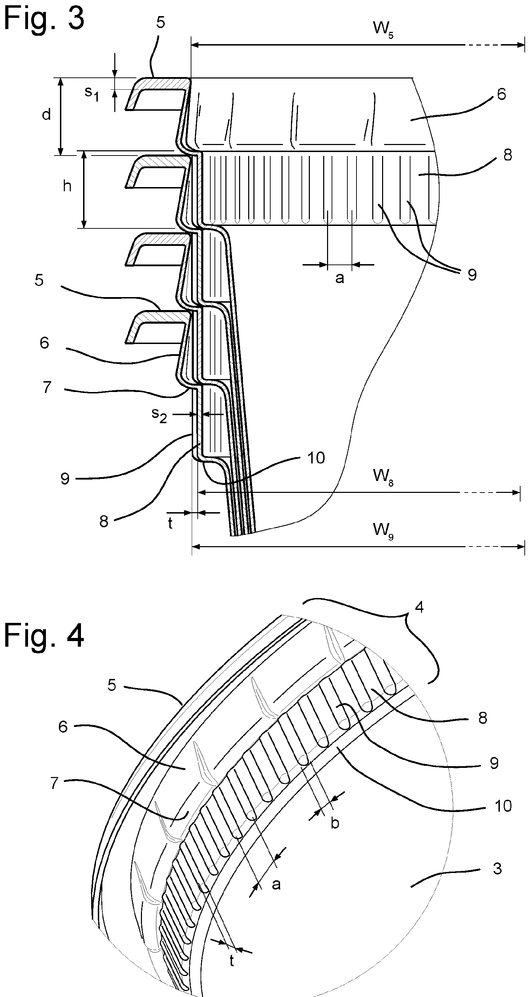

Das Spiel ergibt sich, indem die Pflanzentöpfe koaxial im Stapel ausgerichtet und in einem definierten Stapelabstand d zueinander platziert werden. Die Pflanzentöpfe sollen sich nicht ineinander verkeilen, auch nicht bei hohen Stapeln, bei denen die untersten Pflanzentöpfe insbesondere beim Transport auf LKWs stark belastet werden. Im Randbereich 4 des Pflanztopfes 1 ist dazu ein Stapelrand 6 mit Z-förmigem Querschnitt vorgesehen, der unterhalb eines flanschförmigen Rands 5 konterkonisch zur Topfwand 3 eingeformt ist und in der Draufsicht eine vom Rand 5 überdeckte Stapelkante 7 ausbildet. Der obere Rand 5 dient dazu, einen weiteren Pflanztopf darauf zu stellen, während die Stapelkante 7 auf dem Rand 5 eines darunter angeordneten Pflanztopfes aufliegt. Der Stapelabstand d ist der Abstand zwischen dem oberen flanschförmigen Rand 4 und der Stapelkante 7. Siehe hierzu die Schnittansicht in Fig. 3. Für eine gute Entformbarkeit einerseits und eine gute Stapelbarkeit andererseits ist der Stapelrand 6 im Anschluss an die Stapelkante 7 wellenförmig gestaltet, siehe Fig. 4.

Zum maschinellen Entstapeln werden die Stapel in Topfmagazine gegeben. In Fig. 2 sind Haltebacken 21, 23 und ein Abwerfer 22 eines typischen Topfmagazins gezeigt. Eine obere Haltebacke 21 steht zusammen mit einem Abwerfer 22 zwischen den Rändern 5 des letzten und vorletzten Pflanztopfes, während eine untere Haltebacke 23 an einer Schulter 10 der Topfwand 3 des untersten Pflanztopfs anliegt. Um den untersten Pflanztopf vom Stapel zu trennen, wird die untere Haltebacke 23 weggeschwenkt und nachfolgend der Abwerfer 22 zum Abschieben des Pflanztopfes nach unten bewegt. Die obere Haltebacke wird ausgeschwenkt, um den Stapel an die zurückgeschwenkte untere Haltebacke 23 zu übergeben. Die obere Haltebacke 21 und der Abwerfer 22 werden abschließend in den nächsten Zwischenraum bewegt.

Für eine höhere Stapeltragfähigkeit des Pflanztopfes 1 und ein leichteres Entstapeln ist erfindungsgemäß in die Topfwand 3 unterhalb des Stapelrands 6 ein zylindrischer Abschnitt 8 eingeformt, dessen Höhe h gleich oder minimal kleiner ist als der Stapelabstand d. Er hat gegenüber dem Rand 5 eine geringere Wandstärke s₂, welcher herstellungsbedingt die größte Wandstärke s₁ des Pflanztopfes aufweist. Im Übergang zum darunter liegenden konischen Wandbereich ist die oben erwähnte Schulter 10 in die Topfwand 3 eingezogen. Wie in den Figuren Fig. 1 und Fig. 4 zu sehen ist, ist über den Umfang des zylindrischen Abschnitts 8 eine Vielzahl von zur Längsachse des Pflanztopfes parallelen und radial nach außen ragenden Rippen 9 in einem gleichen gegenseitigen Abstand a ausgeformt. Die Rippen 9 haben eine Breite b und eine Tiefe t.

Die Tiefe t der Rippen 9 ist derart bemessen, dass sie mit Null oder leichtem Übermaß an der Innenkante des flanschförmigen Rands 5 eines untergestapelten Pflanztopfes anliegen. Die über die Rippen 9 gemessene Weite W₉ ist also gleich oder leicht größer als die Öffnungsweite W₅ im Rand 5, während die Weite W₈ bzw. der Durchmesser des zylindrischen Abschnitts ohne die Rippen etwas kleiner als die Öffnungsweite W₅ ist. Dadurch wird der Pflanztopf 1 beim Einstapeln über die Höhe h, die ungefähr gleich dem Stapelabstand d ist, bereits geführt, bevor der Pflanztopf seine endgültige Position im Stapel erreicht hat. Die radialelastischen Eigenschaften des zylindrischen Abschnitts 8 verhindern, dass die Pflanztöpfe aneinander reiben, und sorgen dafür, dass die Pflanzentöpfe genau koaxial und spielfrei zentriert werden. Beim Stapeln und Entstapeln kann Luft zwischen den im Abstand a angeordneten Rippen 9 entweichen.

Der zylindrische Abschnitt 8 bildet insbesondere durch die radial vorstehenden Rippen 9 eine radial verbreiterte Schulter 10 aus, über die sich der Pflanztopf zusätzlich zur Stapelkante 7 auf einem untergestapelten Pflanztopf abstützt. Die Schulter 10 liegt dabei auf der Innenseite der Stapelkante 7 auf. In Kombination mit der spielfreien Führung wird ein wesentlich stabilerer Pflanztopfstapel gebildet, der nicht nur besser alleine steht, sondern auch beim Transport in Kartonagen höher gestapelt werden kann, ohne dass beim Transport mit LKWs die insbesondere unteren Pflanztöpfe tiefer ineinander rutschen und sich verkeilen. Die Stapelstauchfestigkeit ist erhöht und der Kippwinkel ist verringert.

An der radial verbreiterten und durch die Rippen 9 axial ausgesteiften Schulter 10 können auch hohe und damit schwere Stapel sicher von der untere Haltebacke 23 getragen werden. Topfmagazine können schneller und vor allem störungsfreier eingestellt werden.

### Bezugszeichenliste

| | | | |
|---|---|---|---|
| 1 | Pflanztopf | d | Stapelabstand |
| 2 | Aufstellboden | h | Höhe |
| 3 | Topfwand | a | Abstand |
| 4 | Randbereich | t | Tiefe |
| 5 | Rand | b | Breite |
| 6 | Stapelrand | S₁ | Wandstärke |
| 7 | Stapelkante | S₂ | Wandstärke |
| 8 | Zylindrischer Abschnitt | W₅ | Öffnungsweite |
| 9 | Rippe | W₈ | Weite zylindrischer Abschnitt |
| 10 | Schulter | W₉ | Weite Rippen |
| 21 | Obere Haltebacke | | |
| 22 | Abwerfer | | |
| 23 | Untere Haltebacke | | |

## Patentansprüche

1. **Pflanztopf** (1) aus dünnwandigem Kunststoff,
• mit einer generell konischen Topfwand (3) und einem zur Versteifung und Entwässerung profilierten und Löcher aufweisenden Aufstellboden (2),
• mit einem oberen flanschförmigen Rand (5),
• mit einem unterhalb des Randes (5) in die Topfwand eingeformten, im Wesentlichen gegenkonischen Stapelrand (6), zur Ausbildung einer Stapelkante (7),
• wobei ein Stapelabstand (d) zwischen dem Rand (5) und der Stapelkante (7) definiert ist,
**dadurch gekennzeichnet,**
• **dass** unterhalb des Stapelrands (6) ein zylindrischer Abschnitt (8) in die Topfwand eingeformt ist,
• dessen Höhe (h) kleiner oder gleich dem Stapelabstand (d) ist.

2. Pflanztopf nach Anspruch 1, **dadurch gekennzeichnet,**
**dass** der zylindrische Abschnitt (8) eine spielarme Zentrierung und/oder Führung zu einem untergestapelten Pflanztopf ausbildet.

3. Pflanztopf nach Anspruch 1 oder 2, **dadurch gekennzeichnet,**
**dass** in dem zylindrischen Abschnitt (8) mehrere über den Umfang verteilte und radial nach außen vorstehende Rippen (9) ausgeformt sind.

4. Pflanztopf nach Anspruch 3, **dadurch gekennzeichnet,**
**dass** die Rippen (9) einen gegenseitigen Abstand (a) in Umfangsrichtung von kleiner gleich 25 mm, bevorzugt kleiner gleich 12 mm, weiter bevorzugt zwischen 1,5 und 6 mm aufweisen.

5. Pflanztopf nach Anspruch 3 oder 4, **dadurch gekennzeichnet,**
**dass** die Rippen (9) eine Tiefe (t) zwischen 0,1 und 2,5 mm, bevorzugt zwischen 0,1 und 1,0 mm aufweisen.

6. Pflanztopf nach einem der Ansprüche 3 bis 5, **dadurch gekennzeichnet, dass** die Weite (W₉) von gegenüberliegenden Rippen (9) ungefähr gleich oder leicht größer als die Öffnungsweite (Ws) des flanschförmigen Rands (5) ist.

7. Pflanztopf nach einem der Ansprüche 1 bis 6, **dadurch gekennzeichnet, dass** der Pflanztopf eine generell kegelstumpfe, runde Form aufweist.

8. Pflanztopf nach einem der Ansprüche 1 bis 7, **dadurch gekennzeichnet, dass** die Wandstärke (s₂) des zylindrischen Abschnitts das 0,2- bis 0,8-fache von der Wandstärke (s₁) des flanschförmigen Rands ist.
